# FASCICULE DE BREVET EUROPEEN

(11) **EP 1 002 972 B1**
(45) Date de publication et mention de la délivrance du brevet: **03.09.2003**
(21) Numéro de dépôt: 99402858.7
(22) Date de dépôt: 18.11.1999
(51) Int. Cl.: F16J 15/08, F01D 11/00

(54) **Dispositif d'étanchéité à lamelle**
Lamellendichtung
Strip seal

(30) Priorité: 19.11.1998 FR 9814534
(43) Date de publication de la demande: 24.05.2000
(73) Titulaire: SNECMA MOTEURS, 75015 Paris (FR)
(72) Inventeur: Marchi, Marc, 77350 Le Mee (FR); Mareix, Jean-Pierre Louis, 77350 Chartrettes (FR); Rosset, Patrice Jean Marc, 77350 Le Mee s/Seine (FR)

(56) Documents cités:
- FR-A- 2 649 463
- US-A- 5 797 723

## Description

L'invention concerne un dispositif d'étanchéité utilisant une lamelle, destiné à assurer l'étanchéité entre deux zones de circulation de fluide. Elle s'applique en particulier aux distributeurs de turbomachine pour assurer l'étanchéité entre une veine aérodynamique dans laquelle passent des gaz chauds et une enceinte d'alimentation en air de refroidissement d'un distributeur.

Les dispositifs d'étanchéité à lamelle sont souvent utilisés pour réaliser l'étanchéité aux fluides entre deux éléments de structure attenants présents dans une turbomachine dans laquelle règne une différence de pression élevée de part et d'autre des éléments de structure.

Lorsque les éléments de structure sont de forme annulaire, comme c'est le cas pour de nombreux éléments de turbomachine, plusieurs dispositifs d'étanchéité à lamelle de forme courbe sont utilisés et disposés en contact les uns avec les autres de façon à constituer un dispositif d'étanchéité annulaire pratiquement continu disposé entre les éléments de structure.

Les dispositifs d'étanchéité à lamelle connus comportent une lamelle mince et souple munie d'un trou dans lequel coulisse une cheville fixée dans l'un des éléments de structure attenants.

Pour maintenir la lamelle en position d'étanchéité, le dispositif d'étanchéité peut comporter en outre, tel que décrit par exemple dans le brevet FR 2 649 463, un ressort comportant une première partie montée sur l'un des éléments de structure et une deuxième partie montée sur la cheville qui supporte le dispositif d'étanchéité. Le problème posé par ce dispositif est qu'il présente des fuites au niveau du trou dans lequel coulisse la cheville qui supporte le dispositif d'étanchéité.

Le document US-A- 5 797 723 montre un dispositif selon le préambule de la revendication 1. Ce dispositif prévoit également des chevilles de maintien nécessitant des trous passants dans la paroi d'une structure à étanchéifier.

Le but de l'invention est de résoudre ce problème et de réaliser un dispositif d'étanchéité à lamelle efficace qui ne soit pas monté à demeure sur les éléments de structure et comportant un système de maintien simple sans cheville, démontable facilement, facile à fabriquer et assurant la stabilité du dispositif d'étanchéité en position fonctionnelle d'étanchéité.

Pour cela l'invention concerne un dispositif d'étanchéité à lamelle pour assurer une étanchéité aux fluides entre un premier et un deuxième élément de structure , tel que défini par les caractéristiques de la revendication 1.

Avantageusement le maintien en position radiale de la lamelle d'étanchéité est réalisé par des moyens de maintien par pattes recourbées de façon à s'emboiter les unes sous les autres.

Lorsque le dispositif d'étanchéité comporte au moins deux lamelles adjacentes jointives, il comporte en outre une tôle couvre-joint disposée ente les lamelles et l'équerre de façon que la tôle couvre-joint recouvre la jointure entre les deux lamelles adjacentes.

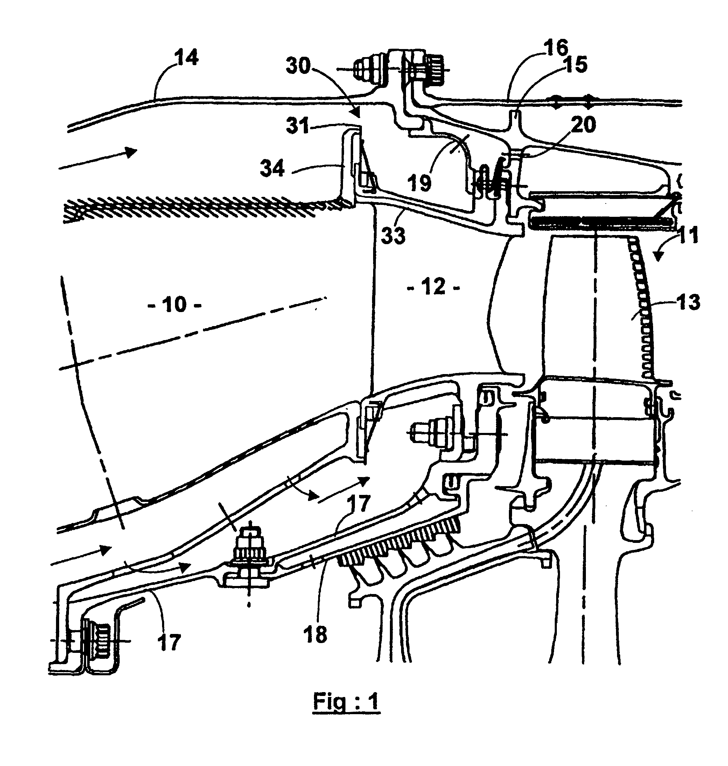

La figure 1 représente une vue en coupe d'une partie de turbomachine illustrant un exemple d'environnement dans lequel peut être utilisé le dispositif d'étanchéité à lamelle selon l'invention.

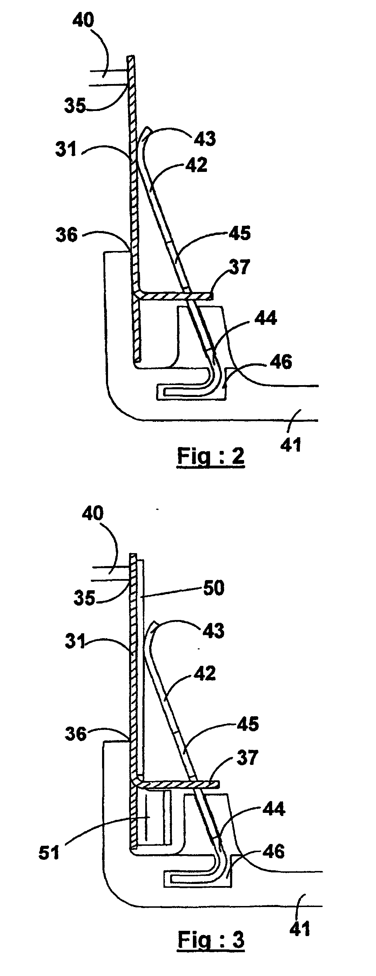

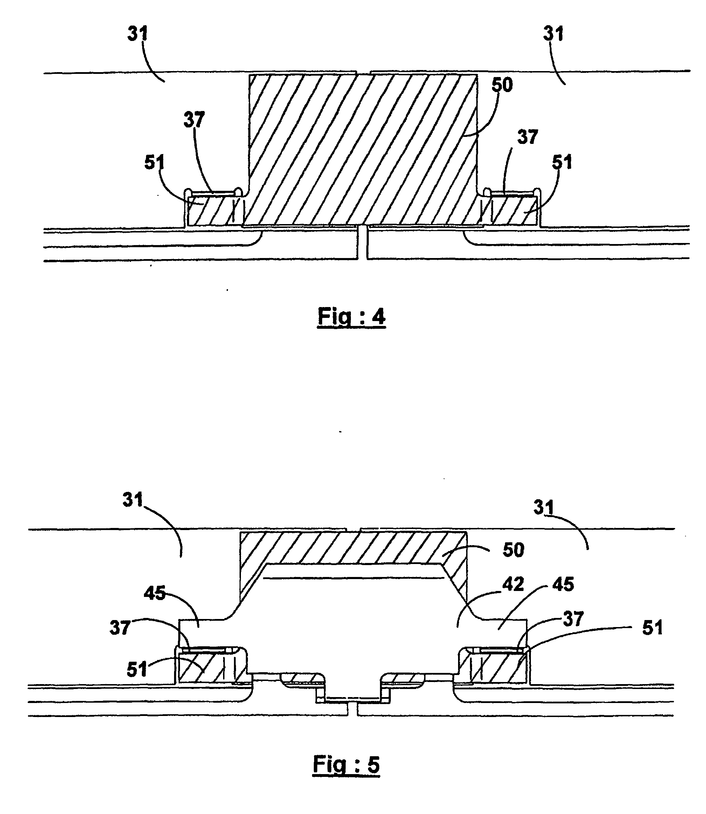

La turbomachine comporte une chambre de combustion 10 et une turbine à haute pression 11 constituée d'un ou de plusieurs étages. Chaque étage de la turbine comporte une rangée d'aubes directrices de turbine 12 et une rangée d'aubes mobiles de turbine 13 disposées en alternance de manière connue. La turbine haute pression est supportée par une structure comportant, du côté radialement extérieur, un carter extérieur 14 de la chambre de combustion, une bague extérieure 15 de turbine et un carter 16 de turbine reliés ensembles par des boulons. Du côté radialement intérieur de la turbine, un carter intérieur 17 de la chambre de combustion est relié à une bague intérieure 18 de la turbine. De façon classique, de l'air de refroidissement à haute pression circule autour de la chambre de combustion annulaire dans l'enceinte annulaire située entre le carter et la chemise de la chambre de combustion. L'air de refroidissement s'écoule également en aval au travers d'orifices 19, 20, pour refroidir les directrices de turbine. Il est nécessaire d'éviter toute fuite d'air entre les éléments de structure de la turbomachine situés entre la chambre de combustion 10 et l'étage des aubes directrices 12 afin d'obtenir l'écoulement d'air de refroidissement souhaité dans les éléments de la turbomachine. Pour cela, un dispositif d'étanchéité selon l'invention est disposé dans l'espace séparant les éléments de structure de la turbomachine situés entre la chambre de combustion 10 et l'étage des aubes directrices 12. Le dispositif d'étanchéité comporte une lamelle 31 ayant une extrémité intérieure venant en contact avec la paroi avant d'un carter 33 extérieur de l'aube directrice 12 et une extrémité extérieure venant en contact avec la paroi arrière 34 de la chambre de combustion. La lamelle est maintenue dans la position d'étanchéité par des moyens de maintien selon l'invention, décrits ci-dessus en liaison avec les figures 2 à 5.

La figure 2 représente une vue en coupe d'un exemple de dispositif d'étanchéité à lamelle, selon l'invention.

Le dispositif d'étanchéité comporte une lamelle souple 31 destinée à assurer l'étanchéité entre deux éléments de structure 40, 41 et une équerre de maintien 42 destinée à maintenir axialement et radialement la lamelle souple en position d'étanchéité. La lamelle souple est disposée dans un espace séparant les premier et deuxième éléments de structure 40, 41 et dans une position d'étanchéité, elle comporte une première 35 et une deuxième génératrice de contact 36 respectivement appuyées sur les premier et deuxième éléments de structure 40, 41. L'équerre de maintien 42 comporte une première extrémité 43 appuyée contre la lamelle d'étanchéité 31 et une deuxième extrémité 44 recourbée en épingle et engagée dans une rainure 46 ménagée dans le deuxième élément de structure 41. La deuxième extrémité 44 de l'équerre 42 maintient la lamelle d'étanchéité 31 en position fonctionnelle d'étanchéité par effet de pincement. La première extrémité 43 de l'équerre 42 est préférentiellement courbée dans une direction opposée à la lamelle pour augmenter la force d'appui exercée sur la lamelle d'étanchéité. L'équerre de maintien 42 peut avantageusement être montée en précontrainte pour obtenir un effet ressort.

L'équerre de maintien 42 maintient la lamelle d'étanchéité 31 en position radiale par exemple par un ensemble de pattes s'emboitant les unes sous les autres.

Sur la figure 2, la lamelle d'étanchéité 31 comporte des pattes 37 découpées dans son extrémité inférieure et recourbées en équerre qui s'emboîtent sous des pattes latérales 45 de l'équerre de maintien 42.

La figure 3 représente une vue en coupe d'un exemple de dispositif d'étanchéité à lamelle pour une application à des éléments de structure de forme annulaire.

Lorsque les éléments de structure sont de forme annulaire, plusieurs dispositifs d'étanchéité à lamelle de forme courbe sont utilisés. Les lamelles sont disposées jointivement les unes au contact des autres de façon à constituer un dispositif d'étanchéité annulaire pratiquement continu entre les éléments de structure.

Pour éviter qu'il y ait des fuites entre deux lamelles adjacentes, le dispositif d'étanchéité, selon l'invention, comporte en outre une tôle souple couvre-joint 50 montée entre les lamelles d'étanchéité et une équerre de maintien de façon à recouvrir la jointure entre les deux lamelles d'étanchéité adjacentes. Les deux lamelles d'étanchéité adjacentes et la tôle couvre-joint sont maintenues en position axiale par l'équerre de maintien.

L'équerre de maintien 42, la tôle couvre-joint 50 et les lamelles d'étanchéité 31 se maintiennent mutuellement en position radiale par exemple par un ensemble de pattes s'emboitant les unes sous les autres.

Sur les figures 3, 4, 5, les lamelles d'étanchéité adjacentes comportent des pattes recourbées en équerre qui s'emboitent sous des pattes latérales de l'équerre de maintien ; la tôle couvre-joint 50 comporte deux pattes latérales 51 recourbées en double équerre qui s'emboitent sous les pattes des deux lamelles d'étanchéité adjacentes.

L'ensemble est maintenu en position fonctionnelle d'étanchéité par engagement de l'équerre de maintien 42 dans une rainure 46 ménagée dans le deuxième élément de structure 41.

L'invention présente l'avantage d'utiliser des pièces constituées uniquement de tôles embouties faciles à fabriquer. Le dispositif d'étanchéité réalisé est léger, compact et de faible coût.

L'invention n'est pas limitée aux exemples de réalisation précisément décrits. En particulier, l'équerre de maintien représentée sur les figures est disposée obliquement par rapport à la lamelle d'étanchéité, mais elle peut également être disposée parallèlement à la lamelle d'étanchéité. En outre, l'équerre de mantien peut être précontrainte ou non. Le système de maintien en position radiale peut être réalisé de façon différente qu'au moyen de pattes s'emboitant les unes sous les autres. L'utilisation de pattes n'est qu'un exemple de réalisation particulièrement simple ne nécessitant pas de pièces supplémentaires.

## Revendications

1. Dispositif d'étanchéité à lamelle pour assurer une étanchéité aux fluides entre un premier et un deuxième élément de structure, comportant:
- au moins une lamelle d'étanchéité souple (31) disposée en une position d'étanchéité dans un espace séparant le premier (40) et le deuxième (41) éléments de structure et comportant une première (35) et une deuxième (36) génératrices de contact appuyées respectivement sur les premier et deuxième éléments de structure (40, 41),
- une equerre de maintien (42) comportant une première extrémité (43) appuyée contre la lamelle d'étanchéité (31) et une deuxième extrémité (44) recourbée en épingle permettant d'assurer le positonnement de l'équerre (42) par rapport au deuxième élément de structure (41), **caractérisé en ce que** ladite deuxième extrémité recourbée en épingle (44) est engagée dans une rainure (46) ménagée dans le deuxième élément de structure (41) pour assurer le positionnement axial de la lamelle d'étanchéité (31) et maintenir en permanence la lamelle en position d'étanchéité, par effet de pincement de la lamelle entre l'équerre et les premier et deuxième éléments de structure.

2. Dispositif d'étanchéité à lamelle selon la revendication 1, **caractérisé en ce que** la lamelle d'étanchéité (31) comporte, dans une extrémité inférieure, des pattes (37) recourbées en équerre qui s'emboîtent sous des pattes latérales (45) de l'équerre de maintien (42) pour assurer le maintien de la lamelle d'étanchéité en position radiale.

3. Dispositif d'étanchéité à lamelle selon la revendication 1, **caractérisé en ce que** l'équerre de maintien (42) est montée en précontrainte.

4. Dispositif d'étanchéité à lamelle selon la revendication 1, **caractérisé en ce qu'**il comporte au moins deux lamelles d'étanchéité adjacentes jointives et **en ce qu'**il comporte en outre une tôle couvre-joint (50) montée entre les lamelles d'étanchéité et l'équerre de maintien de façon à recouvrir la jointure entre les deux lamelles d'étanchéité adjacentes.

5. Dispositif d'étanchéité à lamelle selon la revendication 4, **caractérisé en ce que** les lamelles d'étanchéité adjacentes comportent des pattes (37) recourbées en équerre qui s'emboitent sous des pattes latérales (45) de l'équerre de maintien et **en ce que** la tôle couvre-joint (50) comporte deux pattes latérales (51) recourbées en double équerre qui s'emboitent sous les pattes (37) des deux lamelles d'étanchéité adjacentes pour assurer le maintien des lamelles d'étanchéité et de la tôle couvre-joint en position radiale.

## Patentansprüche

1. Lamellen-Dichtvorrichtung zur Abdichtung zwischen einem ersten und einem zweiten Strukturelement gegenüber Fluiden, aufweisend:
- wenigstens eine flexible Dichtlamelle (31), die in einer Abdichtposition in einem Raum angeordnet ist, der das erste (40) von dem zweiten (41) Strukturelement trennt, und die einen ersten (35) und einen zweiten (36) Kontaktbereich aufweist, die je auf das erste bzw. zweite Strukturelement (40, 41) drücken,
- einen Haltebügel (42), der ein erstes Ende (43) aufweist, das gegen die Dichtlamelle (31) drückt, sowie ein zweites Ende (44), das spangenförmig gebogen ist und die Positionierung des Bügels (42) bezüglich des zweiten Strukturelements (41) gewährleistet,
**dadurch gekennzeichnet,**
**daß** das zweite spangenförmig gebogene Ende (44) in eine Nut (46) eingreift, die in dem zweiten Strukturelement (41) vorgesehen ist, um die Axialpositionierung der Dichtlamelle (31) zu gewährleisten und die Dichtlamelle ständig in der Dichtposition zu halten, indem die Lamelle zwischen dem Bügel und dem ersten und zweiten Strukturelement zangenförmig gehalten wird.

2. Lamellen-Dichtvorrichtung nach Anspruch 1, **dadurch gekennzeichnet, daß** die Dichtlamelle (31) an ihrem unteren Ende gebogene Laschen (37) aufweist, die unter Querlaschen (45) des Bügels (42) geschoben sind, um die Radialpositionierung der Dichtlamelle zu gewährleisten.

3. Lamellen-Dichtvorrichtung nach Anspruch 1, **dadurch gekennzeichnet, daß** der Haltebügel (42) unter Vorspannung montiert ist.

4. Lamellen-Dichtvorrichtung nach Anspruch 1, **dadurch gekennzeichnet, daß** sie wenigstens zwei miteinander verbundene und angrenzende Dichtlamellen aufweist, und daß sie darüber hinaus ein Stoss-Abdeckblech (50) aufweist, das zwischen die Dichtlamellen und die Haltebügel derart montiert ist, daß es die Stossbereiche zwischen zwei aneinander angrenzenden Dichtlamellen abdeckt.

5. Lamellen-Dichtvorrichtung nach Anspruch 4, **dadurch gekennzeichnet, daß** aneinander angrenzende Dichtlamellen bügelförmig gebogene Laschen (37) aufweisen, die unter Querlaschen (45) des Haltebügels eingeschoben sind, und **dadurch, daß** das Stoss-Abdeckblech (50) zwei Querlaschen (51) aufweist, die in der Form eines Doppelbügels gebogen sind und unter die Laschen (37) der von einander angrenzenden Dichtlamellen geschoben sind, um die Radialpositionierung der Dichtlamellen und des Stoss-Abdeckblechs zu gewährleisten.

## Claims

1. Strip seal device for sealing against fluid between a first and second structural element, comprising:
- at least one flexible sealing strip (31) arranged in a sealing position in a space separating the first (40) and second (41) structural elements and comprising a first (35) and a second (36) contact generatrix pressed respectively against the first and second structural elements (40, 41),
- a holding bracket (42) comprising a first end (43) pressed against the sealing strip (31) and a second end (44) bent as a hairpin to allow the bracket (42) to be positioned with respect to the second structural element (41); **characterized in that** the said second end bent as a hairpin (44) is engaged in a groove (46) made in the second structural element (41) to axially position the sealing strip (31) and constantly hold the strip in the sealing position by the effect of the strip's being trapped between the bracket and the first and second structural elements.

2. Strip seal device according to Claim 1, **characterized in that** the sealing strip (31) comprises, in a lower end, lugs (37) bent at right angles and that fit under lateral lugs (45) of the holding bracket (42) to hold the sealing strip in a radial position.

3. Strip seal device according to Claim 1, **characterized in that** the holding bracket (42) is mounted with preload.

4. Strip seal device according to Claim 1, **characterized in that** it comprises at least two contiguous adjacent sealing strips and **in that** it further comprises a cover plate (50) mounted between the sealing strips and the holding bracket to cover the joint between the two adjacent sealing strips.

5. Strip seal device according to Claim 4, **characterized in that** the adjacent sealing strips have lugs (37) bent at right angles and that fit under the lateral lugs (45) of the holding bracket and **in that** the cover plate (50) has two lateral lugs (51) bent twice at right angles and that fit under the lugs (37) of the two adjacent sealing strips to hold the sealing strips and the cover plate in a radial position.
